# EUROPEAN PATENT SPECIFICATION

(11) **EP 2 334 096 B1**
(45) Date of publication and mention of the grant of the patent: **18.07.2018**
(21) Application number: 09812638.6
(22) Date of filing: 26.08.2009
(51) Int. Cl.: H04J 3/16

(54) **METHOD AND DEVICE FOR LARGE CAPACITY CROSS IN OPTICAL CHANNEL DATA UNIT**
VERFAHREN UND VORRICHTUNG FÜR HOCHKAPAZITIVEN QUERVERSAND VON DATENHEITEN EINES OPTISCHEN KANALS
PROCÉDÉ ET DISPOSITIF POUR UN CROISEMENT DE GRANDE CAPACITÉ DANS UNE UNITÉ DE DONNÉES D' UN CANAL OPTIQUE

(30) Priority: 10.09.2008 CN 200810119785
(43) Date of publication of application: 15.06.2011
(73) Proprietor: ZTE Corporation, Shenzhen, Guangdong 518057 (CN)
(72) Inventor: WANG, Youbao, Shenzhen Guangdong 518057 (CN); DENG, Chunsong, Shenzhen Guangdong 518057 (CN)
(74) Representative: J A Kemp
(86) International application number: PCT/CN2009/073527
(87) International publication number: WO 2010/028572

(56) References cited:
- EP-A2- 1 217 867
- EP-B1- 1 280 373
- WO-A1-2008/077280
- CN-A- 1 791 278
- US-A1- 2006 245 450
- HUUB VAN HELVOORT HUAWEI TECHNOLOGIES CO LTD P R CHINA: "Draft revised Recommendation G.707/Y.1322 (for consent);TD 305 Rev1 (PLEN/15)", ITU-T DRAFT ; STUDY PERIOD 2005-2008, INTERNATIONAL TELECOMMUNICATION UNION, GENEVA ; CH, vol. 11/15, 24 October 2006 (2006-10-24), pages 1-198, XP017562048, [retrieved on 2006-10-24]

## Description

### Technical Field

The present invention relates to the technical field of optical communication, and in particular, to a method and device for large capacity cross in Optical channel Data Unit (ODU) of an OTH (Optical Transport Hierarchy).

### Background of the Invention

Optical Transport Hierarchy is a new generation of standardized digital transport hierarchy following SDH (Synchronous Digital Hierarchy), and is a newly developed transparent transport hierarchy that is mainly intended to meet explosive data bandwidth; meanwhile it can satisfy ODU scheduling requirements on the backbone network layer. ODU is segmented into ODU1, ODU2 and ODU3 in ITU-T (International Telecommunications Union Telecommunication Standardization Sector) G.709. OTN (Optical Transport Network) is scheduled based on ODU*k* (*k*=1, 2, 3) in order to achieve cross-connection function of ODUK.

How cross-connection function of ODUK is achieved in the prior art will be briefly introduced below.

Prior art one: Cross-connection function of ODUK is achieved through asynchronous cross connection, i.e., three signals of ODU1, ODU2 and ODU3 with different rates are scheduled through three different cross matrixes which are coupled with each other through time division multiplexing and demultiplexing, and can implement granularity cross based on ODU1, ODU2 and ODU3. Since ODU adopts asynchronous cross, but the current asynchronous cross chip is not mature, no asynchronous cross chip with large granularity and ultra large capacity based on ODU1, ODU2 and ODU3 can be provided. Additionally, there is service loss when main/standby switch is performed in asynchronous manner, and since this kind of cross is only based on ODU granularity cross, it can be only applied to OTN scheduling and cannot be applied to compatible scheduling of SDH services, which is not favorable to smooth upgrading from SDH to OTN and their compatibility.

Prior art two: Cross of OTN is achieved using a cross-connection device of an optical synchronous digital transport hierarchy. Firstly, an OTN service is asynchronously mapped into a VC4-XC virtual concatenation structure specified by ITU-T G.707, then VC4-XC is mapped into a synchronous system bus and synchronized through the system clock, and the ODU services are bound and crossed using an optical synchronous digital cross-connection device. The problem of this technology is that the rate of the ODU1 service is STM-17 (Level-17 Synchronous Transmission Module), ODU1 needs to be mapped to STM-17, and then STM-17 is de-mapped to STM-1 (Level-1 Synchronous Transmission Module) rate for entering a cross chip to perform cross in order to achieve cross of OTN through a cross-connection device of the optical synchronous digital transport hierarchy. This will cause an increase in device cost, and is also not favorable to achievement of ODU large capacity cross.

The document US 2010/0034217A1 discloses a method and device for supporting optical transmission network service dispatch in optical synchronization network.

### Summary of the Invention

In order to solve the above problem, the purpose of the present invention is to provide a method and device for large capacity cross in an optical channel data unit to achieve cross-connection of ODUK services with ultra capacity; meanwhile, since the OTN service is mapped to a system synchronous bus, lossless protection switching of the ODU service can be realized.

In order to achieve the above purpose, one embodiment of the present invention provides a method for large capacity cross in an optical channel data unit, the method comprises:
de-mapping an ODU service from an optical transport network, and asynchronously mapping the ODU service into a higher order virtual container concatenation VC4-XC structure;
segmenting, mapping and then encapsulating the ODU service in the VC4-XC structure into a plurality of TFI-5 bus structures; and
binding and crossing bus signals in the TFI-5 bus structures after encapsulation according to AU4 granularity.

Preferably, the step of binding and crossing bus signals in the TFI-5 bus structures after encapsulation according to AU4 granularity also comprises:
performing data stream segmentation for the bus structure after encapsulation according to VC4, and binding and crossing segmented data stream according to AU4.

Preferably, the ODU service includes: ODU1 service, ODU2 service and ODU3 service;
the step of mapping the ODU service into the VC4-XC structure comprises: asynchronously mapping the ODU1 service into VC4-17C; and asynchronously mapping the ODU2 service into VC4-68C.

Preferably, the segmenting and mapping is segmenting and mapping into a 10 rows* 16 columns bus structure;
the step of encapsulating into a plurality of TFI-5 bus structure is: encapsulating the bus structure after segmentation and mapping according to TFI-5 2.488Gbps.

Preferably, the segmenting and mapping is segmenting and mapping into a 8 rows * 17 columns bus structure;
the step of encapsulating into a plurality of TFI-5 bus structure comprises:
encapsulating the bus structure after segmentation and mapping according to TFI-5 2.67Gbps; and
de-mapping AU4 from the TFI-5 2.67Gbps after encapsulation.

One embodiment of the present invention also provide a device for large capacity cross in an optical channel data unit, and the device comprises: an OTN service processing module, a VC4-XC cascaded processing module, a TFI-5 bus processing module and a digital cross-connection module that are sequentially connected, wherein:
the OTN service processing module is configured to de-map an ODU service from an optical transport network;
the VC4-XC cascaded processing module is configured to asynchronously map the ODU service into a VC4-XC structure;
the TFI-5 bus processing module is configured to segment, map and then encapsulate the ODU service in the VC4-XC structure into a plurality of TFI-5 bus structures; and
the digital cross-connection module is configured to bind and cross bus signals in the TFI-5 bus structures after encapsulation according to AU4 granularity.

Preferably, the digital cross-connection module comprises a data stream segmenting and regrouping unit which is configured to perform data stream segmentation for the bus signals after encapsulation according to VC4, and bind and cross segmented data stream according to AU4.

Preferably, the device also comprises a FIFO register disposed between the OTN service processing module and the VC4-XC cascaded processing module, wherein the FIFO register is used to buffer data.

Preferably, the device also comprises a system clock module which is configured to provide synchronous bus signals.

At least one of the above technical solutions has the following favorable effects: ODU non-standard rate can be synchronously mapped to a synchronous bus in STM-16 system of SDH by mapping and segmenting the ODU service to a plurality of TFI-5 (TDM fabric to framer Interface, an interface bus defined in Optical Internetworking Forum standards) bus structures, thus directly entering STM-16 interface synchronous cross chip for crossing, meanwhile, the cross capacity of the whole system is enlarged more than 8 times. Additionally, a SDH service can be directly synchronously mapped to a synchronous bus in STM-16 system of SDH, thus satisfying requirements for smooth upgrading from SDH to OTN.

### Brief Description of Drawings

FIG. 1 is a flow chart of large capacity cross in ODU in accordance with an embodiment of the present invention;
FIG. 2 illustrates TFI-5 bus segmenting and mapping ODU1, ODU2 services in accordance with an embodiment of the present invention;
FIG. 3 illustrates encapsulation of TFI-5 frame format in accordance with an embodiment of the present invention;
FIG. 4 illustrates segmentation of data stream in accordance with an embodiment of the present invention;
FIG. 5 illustrates the structure of a device for large capacity cross in ODU in accordance with an embodiment of the present invention.

### Preferred Embodiments of the Invention

The embodiments of the present invention provide a device and a method for large capacity cross of ODU. Firstly, an ODU service is de-mapped from an OTN service and mapped into VC4-XC by way of asynchronous mapping, then the ODU service in VC4-XC is segmented and mapped into a plurality of TFI-5 bus structures, wherein the cross capacity can be 8-times enlarged; afterwards, the services encapsulated into TFI-5 buses are subjected to Level-1 VC4 service segmentation, wherein the cross capacity can be 4-times enlarged according to 2bit segmentation mode; finally, they are bound and crossed using a synchronous cross chip whose cross plane supports AU4 (Administrative Unit)-level according to ODU-level granularity. Since the system side adopts a frame structure with a STM-16 rate which is the same as SDH, ODU services can be crossed and scheduled through a synchronous digital system, and SDH services can also be directly crossed and scheduled through the bus, thus achieving uniform scheduling of SDH services and OTN services and satisfying smooth upgrading from SDH to OTN.

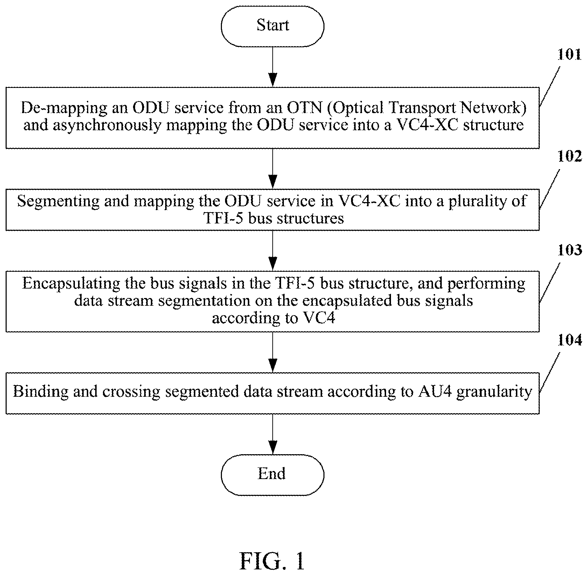

In order to make the purpose, technical scheme and advantages of the embodiments of the present invention clearer, the embodiments of the present invention will be further described in detail below with reference to accompanying drawings. Here, the illustrative embodiments and description of the present invention are only used to explain the present invention, but not intended to limit the present invention. As shown in FIG. 1, it is a flow chart of a method for large capacity cross in ODU in accordance with an embodiment of the present invention, and the specific steps are as follows:
Step 101, de-mapping an ODU service from an OTN (Optical Transport Network) and asynchronously mapping the ODU service into a VC4-XC structure;
   In this embodiment, the OTN service supports 2-path OTU2 service processing, and the OTN service after processing can be 2-path ODU2 or 8-path ODU1, wherein the ODU2 service can be asynchronously mapped into a VC4-68C structure and the ODU1 service into a VC4-17C structure.
Step 102: segmenting and mapping the ODU service in VC4-XC into a plurality of TFI-5 bus structures;

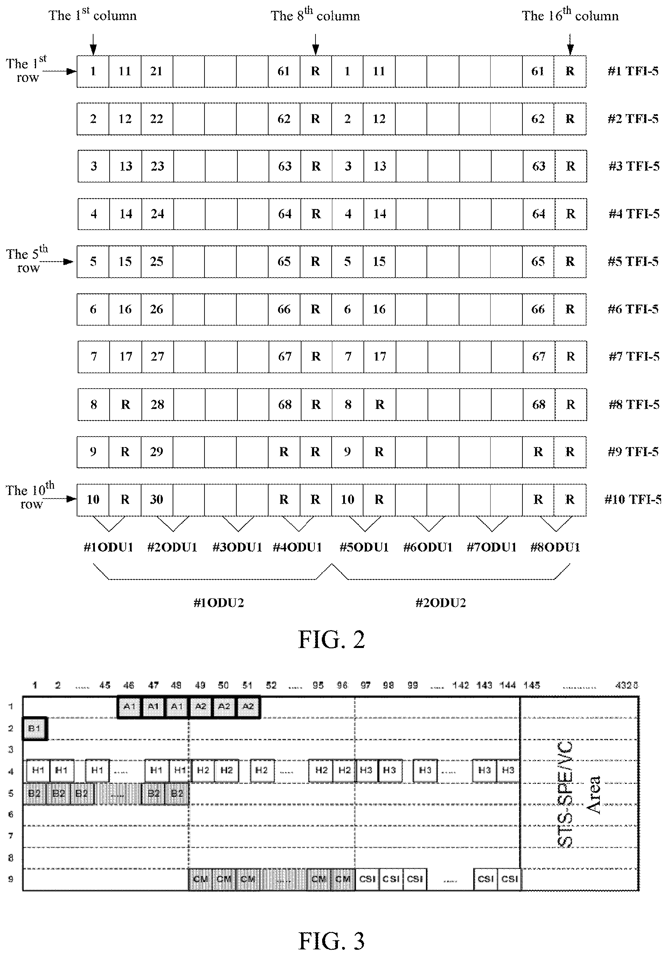

In this step, a VC4-XC cascaded service is segmented and mapped into a plurality of TFI-5 bus structures, and the drawing of bus structure for segmentation and mapping will be introduced in detail below for the purpose of clear illustration. See FIG. 2, the bus structure is a bus structure of 10 rows* 16 columns, i.e., the VC4-XC cascaded service can be segmented and mapped into a bus of 10 rows* 16 columns, in which case, each two columns support a capacity of 20C, and if it is a data stream of ODU1, its capacity is 17C. In this way, each two columns in this structure can map one ODU1, wherein 3C bytes will be idle. The idle part will fill inserting bytes during mapping and will delete inserting bytes during inverse de-mapping. In this structure, each eight columns can map one ODU2, and there will be 12C idle bytes when each ODU2 is mapped into this kind of structure; the idle part will fill inserting bytes during mapping and will delete inserting bytes during inverse de-mapping.

The specific process of mapping ODU1 and ODU2 services into this kind of structure with regards to cascaded services will be described below. The OTN service processing module in this embodiment supports eight ODU1s, in which case the first ODU1 is mapped into the 1^{st} column and 2^{nd} column of this structure, the second ODU1 is mapped into the 3^{rd} column and 4^{th} column of this structure, the third ODU1 is mapped into the 5^{th} column and 6^{th} column of this structure, the fourth ODU1 is mapped into the 7^{th} column and 8^{th} column of this structure, the fifth ODU1 is mapped into the 9^{th} column and 10^{th} column of this structure, the sixth ODU1 is mapped into the 11^{th} column and 12^{th} column of this structure, the seventh ODU1 is mapped into the 13^{th} column and 14^{th} column of this structure, and the eighth ODU1 is mapped into the 15^{th} column and 16^{th} column of this structure. Wherein when a cascaded service VC4-17C is mapped, the 1^{st} column maps 1∼10 from top to bottom and the 2^{nd} column maps 11∼17 from top to bottom, with a total of 17C and remaining 3C filled with inserting bytes. In this embodiment, the mapping order of ODU1 and ODU2 is not restricted.

With regards to the mapping order of ODU2 data stream, the first ODU2 is mapped into the first 8 columns, while the second ODU2 is mapped into the last 8 columns. VC4-68C mapping order in each 8 columns is carried out as follows: the 1^{st} column maps 1∼10 from top to bottom, the 2^{nd} column maps 11∼20 from top to bottom, the 3^{rd} column maps 21∼30 from top to bottom, the 4^{th} column maps 31∼40 from top to bottom, the 5^{th} column maps 41∼50 from top to bottom, the 6^{th} column maps 51∼60 from top to bottom, and the 7^{th} column maps 61∼68 from top to bottom, remaining 12C filled with inserting bytes. In this way, ODU1 and ODU2 services are distributed into ten TFI-5 buses, and the cross capacity is 10-times enlarged. According to STM-16 rate in SDH, it means that the cross capacity is 8-times enlarged.

Step 103, encapsulating the bus signals in the TFI-5 bus structure, and performing data stream segmentation on the encapsulated bus signals according to VC4.

In this step, the TFI-5 bus structure is encapsulated according to TFI-5 2.488Gbps Frame Format. See FIG. 3, each row in the 16 columns* 10 rows bus structure in step 102 is encapsulated into a bus with TFI-5 2.488Gbps Frame Format. Since each row includes 16 columns with a capacity of 16C, they can be precisely mapped into payload part of the TFI-5 2.488Gbps Frame Format. The path overhead part of the TFI-5 2.488Gbps Frame Forma is inserted with 0, the pointer part of the TFI-5 2.488Gbps Frame Format is fixed as 522, the rest of section overhead part of the TFI-5 2.488Gbps Frame Format except the frame header and B1 overhead part can be inserted with overhead bytes that we need to transmit. Overhead bytes can transmit information necessary for protection switching, and can also transmit service alarming information of payload. TFI-5 bus rate STM-16 encapsulated like this can be compatible with and synchronous to SDH. Since payload is in the form of AU4, it can be crossed according to AU4 granularity in the cross unit as a SDH service. It only needs to bind ODU service according to AU4 in order to achieve cross of ODU service. In this embodiment, of course, the TFI-5 bus structure can also be encapsulated according to structures, for example, according to 2.67Gbps, but since the standard rate of SDH is 2.488Gbps, it will be directly compatible with SDH and thus can be directly used to support SDH cross-connection device if encapsulated according to 2.488Gbps. If a nonstandard SDH rate is adopted, it needs to separately develop a cross chip for connection.

It can be seen from above description that the TFI-5 bus structure in this embodiment can also be encapsulated according to 2.67Gbps, in which case the ODU service needs to be segmented and mapped into a structure of 8 rows* 17 columns firstly, and is then encapsulated according to TFI-5 2.67Gbps. Moreover, if the bus signals are to be bound and crossed according to AU4 granularity, it needs to de-map AU4 from TFI-5 2.67Gbps firstly and then to bind and cross the bus signals in the encapsulated TFI-5 bus structure according to AU4 granularity.

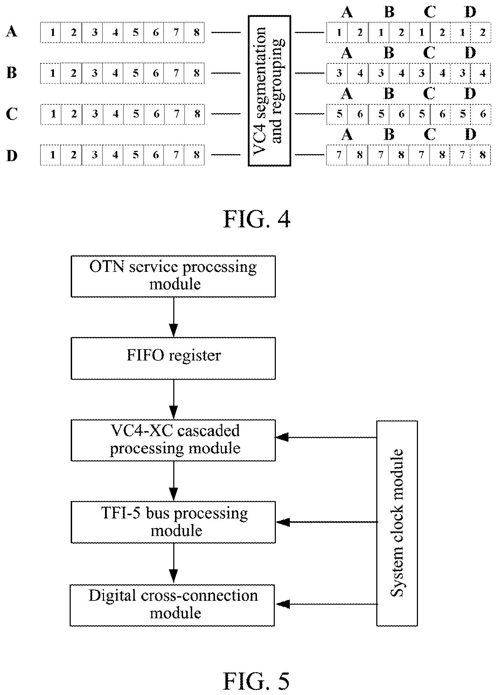

Additionally, in order to further enlarge cross capacity, the TFI-5 bus structure data stream can be segmented according to VC4, wherein the segmentation means is implemented as shown in FIG. 4, and with crossing after such segmentation, the cross capacity can be 4-times enlarged. This segmenting step is optional.

Step 104, binding and crossing segmented data stream according to AU4 granularity.

It can be seen from the above technical scheme that ODU nonstandard rate can be synchronously mapped into STM-16 system synchronous bus of SDH by mapping and segmenting an ODU service into a plurality of TFI-5 bus structures, thus performing cross by directly entering a synchronous cross chip with STM-16 interface, meanwhile the cross capacity of the whole system can be 8-times increased after segmentation.

In order to carry out the above method embodiment, other embodiments of the present invention also provide a device for large capacity cross in an optical channel data unit. Additionally, it should be noted firstly that since the following embodiment is intended to carry out the above method embodiment, the modules in the device are all provided to carry out each step of the aforementioned method, but the present invention is not limited to the following embodiment, and any device that can carry out the above method should fall within the protection scope of the present invention. Moreover, the content that is the same with that described in the above method will be omitted in the following description in order to avoid redundancy.

As shown in FIG. 5, it illustrates the structure of a device for large capacity cross of ODU in accordance with an embodiment of the present invention. The device comprises: an OTN service processing module, a VC4-XC cascaded processing module, a TFI-5 bus processing module, a system clock module for providing synchronous bus signals, a data stream segmentation regroup module and a digital cross-connection module, wherein,
the OTN service processing module is used to de-map an ODU service from an OTN;
the OTN service processing module supports 2-path OTU2 service processing, and the OTN service after processing is 2-path ODU2 or 8-path ODU1, wherein the ODU2 service is mapped into a VC4-68C structure and the ODU1 service into a VC4-17C structure;
the VC4-XC cascaded processing module is used to asynchronously map the ODU service into a VC4-XC cascaded structure;
the TFI-5 bus processing module is used to segment and map the ODU service in the VC4-XC cascaded processing module and encapsulate it into a plurality of TFI-5 bus structures. The structure for mapping VC4-17C is shown in FIG. 2, wherein the structure is 16 columns* 10 rows. With regards to ODU1 service, each two columns of the 1^{st} and the 2^{nd} column, the 3^{rd} and the 4^{th} column, the 5^{th} and the 6^{th} column, the 7^{th} and the 8^{th} column, the 9^{th} and the 10^{th} column, the 11^{th} and the 12^{th} column, the 13^{th} and the 14^{th} column, and the 15^{th} and the 16^{th} column can map one VC4-17C service. The mapping order is from top to bottom starting from the 1^{st} column, followed by the 2^{nd} column, and the last 3C are filled with inserting bytes. As for ODU2 service, the first 8 columns map the first VC4-68C, and the last 8 columns map another VC4-68C. The mapping order is from the 1^{st} column, one column followed by another column from top to bottom, and the last 12C are filled with inserting bytes. Through segmentation and mapping in this structure, each ODU service is segmented into different TFI-5 buses and enters different cross chips to be crossed, and afterwards to achieve regrouping, thus enlarging the cross capacity more than 8 times.

Then the bus signals after segmentation and mapping in the TFI-5 bus processing module are encapsulated according to TFI-5 2.488Gbps Frame Format, wherein the cascaded service is encapsulated into the payload part, and the overhead part can self-define the overhead that it is going to use, can perform TFI-5 bus alarm and error detection, and can also transmit OTN alarming information for switching and for between-plate communication.

The digital cross-connection module is used to bind and cross the encapsulated bus signals in the TFI-5 bus structures according to AU4 granularity.

In the embodiments of the present invention, the digital cross-connection module comprises: a data stream segmentation and regrouping unit used for performing data stream segmentation on the encapsulated bus signals in the TFI-5 according to VC4, which is mainly intended to further enlarge the cross capacity, and meanwhile protection switching modules can be added as required for implementing lossless switching of TFI-5 buses.

The device also comprises: a FIFO register and a system clock module, wherein the FIFO register is disposed between the OTN service processing module and the VC-XC cascaded processing module for buffering data, and the system clock module is used to provide synchronous bus signals for the above module.

The data stream segmented by the data stream segmentation unit enters a cross-connection plane to complete binding and crossing of ODU data stream. The cross plane is composed of 40 cross chips with 320G, the cross chips are not required to be cascaded with each other, and any ODU is directly input to be crossed to any output ODU. It is quite easy to carry it out using the existing cross chips. Through the above process and inverse process, the cross plane single-chip cross chip with 320G capacity can achieve scheduling and crossing processing of a service with 10T capacity at most.

It can be seen from the above technical scheme that the present has the following advantages:
1. The VC4-XC cascaded service is segmented and mapped into a plurality of TFI-5 bus structures so as to achieve the whole system cross capacity of 320G × 8 × 4=10T by using 4 cross chips to compose a cross plane with a single-chip cross chip being 320G. It solves the problem of how to cross and schedule OTU service with ultra large capacity;
2. The system side adopts a frame format with a STM-16 rate which is the same as SDH, ODU service can be crossed and scheduled through a synchronous digital system, and SDH service can also be directly crossed and scheduled through the bus, therefore this system achieves uniform scheduling of SDH service and OTN service, and meanwhile the two systems of SDH and OTN are compatible, and smooth upgrading from SDH to OTN is satisfied;
3. The system bus is achieved according to OIF-TFI-5-01.0-2003.9.16 standard, and the cross chip adopts an existing synchronous digital cross chip supporting AU4 granularity, therefore, the system is much easier to carry out economically;
4. The system bus can perform alarm error detection, meanwhile the system bus overhead byte part can transmit ODU service alarm information and between-plate communication information, and after a protection switching module is added, it can also satisfy requirements on protection switching for a TFI-5 service.

The above embodiments are only preferred embodiments of the present invention, and it should be pointed out that a person having ordinary skill in the art can also make several improvements and modifications without departing from the principle of the present invention. These improvements and modifications should be also construed as within the protection scope of the present invention.

### Industrial Applicability

At least one of the above technical solutions has the following favorable effects: ODU non-standard rate can be synchronously mapped to a synchronous bus in STM-16 system of SDH by mapping and segmenting the ODU service to a plurality of TFI-5 bus structures, thus directly entering STM-16 interface synchronous cross chip for crossing, meanwhile, the cross capacity of the whole system is enlarged more than 8 times. Additionally, a SDH service can be directly synchronously mapped to a synchronous bus in STM-16 system of SDH, thus satisfying requirements for smooth upgrading from SDH to OTN.

## Claims

1. A method for achieving cross-connection of optical channel data unit, ODU, services, **characterized in that**, the method is used to achieve cross-connection of ODU services with ultra capacity and comprises:
de-mapping an ODU service from an optical transport network, and asynchronously mapping the ODU service into a higher order virtual container concatenation VC4-XC structure (101);
segmenting, mapping and then encapsulating the ODU service in the VC4-XC structure into a plurality of TFI-5 bus structures (102, 103); and
binding and crossing bus signals in the TFI-5 bus structures after encapsulation according to AU4 granularity (103, 104).

2. The method of claim 1, wherein the step of binding and crossing bus signals in the TFI-5 bus structures after encapsulation according to AU4 granularity also comprises:
performing data stream segmentation for the bus structure after encapsulation according to VC4 (103), and binding and crossing segmented data stream according to AU4 (104).

3. The method of claim 1, wherein the ODU service includes: ODU1 service, ODU2 service and ODU3 service;
the step of mapping the ODU service into the VC4-XC structure comprises:
asynchronously mapping the ODU1 service into VC4-17C; and asynchronously mapping the ODU2 service into VC4-68C.

4. The method of claim 1, wherein the segmenting and mapping is segmenting and mapping into a 10 rows* 16 columns bus structure;
the step of encapsulating into a plurality of TFI-5 bus structure is: encapsulating the bus structure after segmentation and mapping according to TFI-5 2.488Gbps.

5. The method of claim 1, wherein the segmenting and mapping is segmenting and mapping into a 8 rows* 17 columns bus structure;
the step of encapsulating into a plurality of TFI-5 bus structure comprises:
encapsulating the bus structure after segmentation and mapping according to TFI-5 2.67Gbps; and
de-mapping AU4 from the TFI-5 2.67Gbps after encapsulation.

6. A device for achieving cross-connection of optical channel data unit, ODU, services, **characterized in that**, the device is used to achieve cross-connection of ODU services with ultra capacity and the device comprises: an optical transport network, OTN, service processing module, a VC4-XC cascaded processing module, a TFI-5 bus processing module and a digital cross-connection module that are sequentially connected, wherein:
the OTN service processing module is configured to de-map an ODU service from an optical transport network;
the VC4-XC cascaded processing module is configured to asynchronously map the ODU service into a VC4-XC structure;
the TFI-5 bus processing module is configured to segment, map and then encapsulate the ODU service in the VC4-XC structure into a plurality of TFI-5 bus structures; and
the digital cross-connection module is configured to bind and cross bus signals in the TFI-5 bus structures after encapsulation according to AU4 granularity.

7. The device of claim 6, wherein the digital cross-connection module comprises a data stream segmenting and regrouping unit which is configured to perform data stream segmentation for the bus signals after encapsulation according to VC4, and bind and cross segmented data stream according to AU4.

8. The device of claim 6, wherein the device also comprises a FIFO register disposed between the OTN service processing module and the VC4-XC cascaded processing module, wherein the FIFO register is used to buffer data.

9. The device of claim 6, wherein the device also comprises a system clock module which is configured to provide synchronous bus signals.

## Patentansprüche

1. Verfahren zum Erreichen einer Querverbindung von optischen Kanaldateneinheit, ODU (optical channel data unit),-Diensten, **dadurch gekennzeichnet, dass** das Verfahren verwendet wird, um eine Querverbindung von ODU-Diensten mit ultrahoher Kapazität zu erreichen, und Folgendes umfasst:
Demappen eines ODU-Diensts aus einem optischen Transportnetzwerk und asynchrones Mappen des ODU-Diensts in eine virtuelle Containerverkettungs-VC4-XC-Struktur höherer Ordnung (101);
Segmentieren, Mappen und dann Einkapseln des ODU-Diensts in der VC4-XC-Struktur in eine Vielzahl von TFI-5-Busstrukturen (102, 103); und
Verbinden und Kreuzen von Bussignalen in den TFI-5-Strukturen nach der Einkapselung gemäß AU4-Granularität (103, 104).

2. Verfahren nach Anspruch 1, wobei der Schritt des Verbindens und Kreuzens von Bussignalen in den TFI-5-Busstrukturen nach der Einkapselung gemäß AU4-Granularität außerdem Folgendes umfasst:
Durchführen von Datenstromsegmentierung für die Busstruktur nach der Einkapselung gemäß VC4 (103) und Verbinden und Kreuzen eines segmentierten Datenstroms gemäß AU4 (104).

3. Verfahren nach Anspruch 1, wobei der ODU-Dienst Folgendes beinhaltet:
ODU1-Dienst, ODU2-Dienst und ODU3-Dienst;
der Schritt des Mappens des ODU-Diensts in die VC4-XC-Struktur Folgendes umfasst:
asynchrones Mappen des ODU1-Diensts in VC4-17C; und asynchrones Mappen des ODU2-Diensts in VC4-68C.

4. Verfahren nach Anspruch 1, wobei das Segmentieren und Mappen ein Segmentieren und Mappen in eine Busstruktur von 10 Reihen* 16 Säulen ist;
der Schritt des Einkapselns in eine Vielzahl von TFI-5-Busstrukturen Folgendes ist:
Einkapseln der Busstruktur nach der Segmentierung und dem Mapping gemäß TFI-5 2,488 Gbit/s.

5. Verfahren nach Anspruch 1, wobei das Segmentieren und Mappen ein Segmentieren und Mappen in eine Busstruktur von 8 Reihen* 17 Säulen ist;
der Schritt des Einkapselns in eine Vielzahl von TFI-5-Busstruktur Folgendes umfasst:
Einkapseln der Busstruktur nach der Segmentierung und dem Mapping gemäß TFI-5 2,67 Gbit/s; und
Demappen von AU4 aus dem TFI-5 2,67 Gbit/s nach der Einkapselung.

6. Vorrichtung zum Erreichen einer Querverbindung von optischen Kanaldateneinheit, ODU,-Diensten, **dadurch gekennzeichnet, dass** die Vorrichtung verwendet wird, um eine Querverbindung von ODU-Diensten mit ultrahoher Kapazität zu erreichen, und die Vorrichtung Folgendes umfasst: ein optisches Transportnetzwerk, OTN,-Dienstverarbeitungsmodul, ein kaskadiertes VC4-XC-Verarbeitungsmodul, ein TFI-5-Busverarbeitungsmodul und ein digitales Querverbindungsmodul, die nacheinander verbunden sind, wobei:
das OTN-Dienstverarbeitungsmodul konfiguriert ist, um einen ODU-Dienst aus einem optischen Transportnetzwerk zu demappen;
das kaskadierte VC4-XC-Verarbeitungsmodul konfiguriert ist, um den ODU-Dienst asynchron in eine VC4-XC-Struktur zu mappen;
das TFI-5-Busverarbeitungsmodul konfiguriert ist, um den ODU-Dienst in der VC4-XC-Struktur zu segmentieren, zu mappen und dann in eine Vielzahl von TFI-5-Busstrukturen einzukapseln; und
das digitale Querverbindungsmodul konfiguriert ist, um Bussignale in den TFI-5-Busstrukturen nach der Einkapselung gemäß AU4-Granularität zu verbinden und zu kreuzen.

7. Vorrichtung nach Anspruch 6, wobei das digitale Querverbindungsmodul eine Datenstromsegmentierungs- und neugruppierungseinheit umfasst, die konfiguriert ist, um eine Datenstromsegmentierung für die Bussignale nach der Einkapselung gemäß VC4 durchzuführen und einen segmentierten Datenstrom gemäß AU4 zu verbinden und zu kreuzen.

8. Vorrichtung nach Anspruch 6, wobei die Vorrichtung außerdem ein FIFO-Register umfasst, das zwischen dem OTN-Dienstverarbeitungsmodul und dem kaskadierten VC4-XC-Verarbeitungsmodul angeordnet ist, wobei das FIFO-Register zum Zwischenspeichern von Daten verwendet wird.

9. Vorrichtung nach Anspruch 6, wobei die Vorrichtung außerdem ein Systemtaktmodul umfasst, das konfiguriert ist, um synchrone Bussignale bereitzustellen.

## Revendications

1. Procédé permettant d'obtenir une connexion croisée de services d'unité de données de canal optique, ODU, **caractérisé en ce que** le procédé est utilisé pour obtenir une connexion croisée de services d'ODU avec une grande capacité et comprend :
le démappage d'un service d'ODU d'un réseau de transport optique le mappage asynchrone du service d'ODU dans une structure VC4-XC de concaténation de conteneur virtuel d'ordre supérieur (101) ;
la segmentation, le mappage, puis l'encapsulation du service d'ODU dans la structure VC4-XC en une pluralité de structures de bus TFI-5 (102, 103) ; et
la liaison et le croisement de signaux de bus dans les structures de bus TFI-5 après encapsulation selon une granularité AU4 (103, 104).

2. Procédé de la revendication 1, dans lequel l'étape de liaison et de croisement de signaux de bus dans les structures de bus TFI-5 après encapsulation selon une granularité AU4 comprend également :
la réalisation d'une segmentation pour la structure de bus après encapsulation selon VC4 (103) et la liaison et le croisement d'un flux de données segmentées selon AU4 (104).

3. Procédé de la revendication 1, dans lequel le service d'ODU comprend : le service ODU1, le service ODU2 et le service ODU3 ;
l'étape de mappage du service d'ODU dans la structure VC4-XC comprend :
le mappage asynchrone du service ODU1 dans VC4-XC ; et le mappage asynchrone du service ODU2 dans VC4-68C.

4. Procédé de la revendication 1, dans lequel l'opération de segmentation et mappage et une opération de segmentation et mappage dans une structure de bus de 10 rangées* 16 colonnes ;
l'étape d'encapsulation dans une pluralité de structures de bus TFI-5 est : une encapsulation de la structure de bus après segmentation et mappage selon TFI-5 2,488 Gbit/s.

5. Procédé de la revendication 1, dans lequel l'opération de segmentation et mappage et une opération de segmentation et mappage dans une structure de bus de 8 rangées* 17 colonnes ;
l'étape d'encapsulation dans une pluralité de structures de bus TFI-5 comprend :
l'encapsulation de la structure de bus après segmentation et mappage selon TFI-5 2,67 Gbit/s ; et
le démappage AU4 à partir de TFI-5 2,67 Gbit/s après encapsulation.

6. Dispositif permettant d'obtenir une connexion croisée de services d'unité de données de canal optique, ODU, le dispositif étant utilisé pour obtenir une connexion croisée de services d'ODU avec une grande capacité et le dispositif comprenant : un module de traitement de service de réseau de transport optique, OTN, un module de traitement en cascade de VC4-XC, un module de traitement de bus TFI-5 et un module numérique de connexion croisée qui sont connectés séquentiellement :
le module de traitement de service d'OTN étant configuré pour démapper un service d'ODU à partir d'un réseau de transport optique ;
le module de traitement en cascade de VC4-XC étant configuré pour mapper de manière asynchrone le service d'ODU dans une structure de VC4-XC ;
le module de traitement de bus TFI-5 étant configuré pour segmenter, mapper, puis encapsuler le service d'ODU dans la structure VC4-XC en une pluralité de structures de bus TFI-5 ; et
le module numérique de connexion croisée étant configurée pour lier et croiser des signaux de bus dans les structures de bus TFI-5 après encapsulation selon une granularité AU4.

7. Dispositif de la revendication 6, dans lequel le module numérique de connexion croisée comprenant une unité de segmentation et de regroupement de flux de données qui est configurée pour effectuer une segmentation de flux de données pour des signaux de bus après encapsulation selon VC4, et lier et croiser des flux de données segmentés selon AU4.

8. Dispositif de la revendication 6, le dispositif comprenant également un registre FIFO disposé entre le module de traitement de service d'OTN et le module de traitement en cascade de VC4-XC, le registre FIFO étant utilisé pour mettre des données en mémoire tampon.

9. Dispositif de la revendication 6, le dispositif comprenant également un module d'horloge système qui est configuré pour fournir des signaux de bus asynchrones.
